# EUROPÄISCHE PATENTSCHRIFT

(11) **EP 2 370 903 B1**
(45) Veröffentlichungstag und Bekanntmachung des Hinweises auf die Patenterteilung: **09.08.2017**
(21) Anmeldenummer: 09784065.6
(22) Anmeldetag: 24.11.2009
(51) Int. Cl.: G06F 3/06, G06F 12/02

(54) **SPEICHERZUGRIFF AUF EINEN PORTABLEN DATENTRÄGER**
MEMORY ACCESS TO A PORTABLE DATA STORAGE MEDIUM
ACCÈS MÉMOIRE SUR UN SUPPORT DE DONNÉES PORTABLE

(30) Priorität: 27.11.2008 DE 102008059352
(43) Veröffentlichungstag der Anmeldung: 05.10.2011
(73) Patentinhaber: Giesecke & Devrient GmbH, 81677 München (DE)
(72) Erfinder: BARTSCH, Armin, 86899 Landsberg/Lech (DE); BIRMAN, Boris, 84034 Landshut (DE); RÖCK, Andreas, 80634 München (DE); WENDA, Ingo, 86156 Augsburg (DE)
(86) Internationale Anmeldenummer: PCT/EP2009/065722
(87) Internationale Veröffentlichungsnummer: WO 2010/060902

(56) Entgegenhaltungen:
- WO-A2-02/086719
- WO-A2-2007/019175
- US-A- 5 809 558
- US-A1- 2002 128 994
- US-B1- 7 562 204

## Beschreibung

Die vorliegende Erfindung betrifft ein Verfahren zum direkten Zugreifen auf einen Speicherbereich eines portablen Speicherdatenträgers durch eine auf einem Endgerät ausgeführte Applikation, ein derartiges Endgerät, eine derartige Applikation sowie eine Datenkommunikationsanordnung umfassend ein derartiges Endgerät und einen portablen Speicherdatenträger.

Portable Speicherdatenträger mit immer größeren Speicherkapazitäten, z.B. Mobilfunkkarten, sichere Multimedia- oder sonstige Speicherkarten (MMC, SD), USB-Speicherelemente oder optische Speichermedien, wie z.B. CDs oder DVDs, werden im Zusammenhang mit einer Vielzahl von elektronischen Endgeräten verwendet, beispielsweise um digitale Inhalte zu speichern. Solche Speicherdatenträger sind dabei mit verschiedenen elektronischen Endgeräten kompatibel, wie z.B. mit Mobilfunkendgeräten, Computern, Digitalkameras oder tragbaren Endgeräten, wie z.B. Laptops oder PDAs.

Üblicherweise wird der Speicher eines solchen mit dem Endgerät verbundenen Speicherdatenträgers von einem Betriebssystem des Endgerätes verwaltet, beispielsweise indem ein Dateisystem in dem Speicher angelegt wird, das den physischen Adressraum des Speichers auf einen logischen Adressraum abbildet und durch entsprechende logische Speicherzugriffe ein strukturiertes Ablegen von Daten in Form einer Datei in dem Speicher ermöglicht. Für die logischen Speicherzugriffe stellt das Betriebssystem auf dem Endgerät ausgeführten Applikationen entsprechend abstrakte Funktionsaufrufe bereit.

In bestimmten Fällen und insbesondere für privilegierte oder beschleunige Speicherzugriffe kann es jedoch zweckmäßig sein, dass eine auf dem Endgerät ausgeführte Applikation statt eines von dem Betriebssystem bereitgestellten logischen Speicherzugriffs einen direkten Speicherzugriff auf die physischen Speicheradressen des Speicherdatenträgers unter Umgehung des Betriebssystems durchführt, zum Beispiel direkt auf Speicherdatenblöcke oder Sektoren des Speichers.

D1:WO2007019175 beschreibt die Speicherverwaltung eines nicht-flüchtigen Speichers. Ein Host verwaltet einen Flashspeicher, wie z.B. eine externe Speicherkarte. Dabei adressiert der Host die den Dateien zugeordneten Speicherplätze mithilfe einer einzigartigen File-ID und innerhalb des so aufgefundenen Speicherplatzes ein Offset zur genauen Bestimmung des physikalischen Speicherplatzes einzelner Bytes festgelegt. Hierbei ergibt sich jedoch das Problem, dass Zugriffskonflikte und in infolgedessen Dateninkonsistenzen auftreten, da Direktzugriffe einer Applikation unabhängig und von dem Betriebssystem des Endgeräts unbemerkt durchgeführt werden und das Betriebssystem eine Datenmanipulation durch einen Direktzugriff weder mit regulären, logischen Speicherzugriffen anderer Applikationen synchronisieren kann, noch eine konsistente Datenbasis über die üblichen Speicherverwaltungsmechanismen garantieren kann. Ebenso wenig kann die Applikation bei einem Direktzugriff Zugriffskonflikte und Dateninkonsistenzen verhindern, da die Applikation im Speicher lediglich lokal operiert und kein globales Verständnis des Speichers besitzt.
Demzufolge ist es die Aufgabe der vorliegenden Erfindung, Zugriffskonflikte und Dateninkonsistenzen bei Direktzugriff einer Applikation auf den Speicherdatenträger zu verhindern.
Diese Aufgabe wird erfindungsgemäß durch ein Verfahren, ein Endgerät, ein Computerprogrammprodukt sowie eine Datenkommunikationsanordnung mit den Merkmalen der unabhängigen Ansprüche gelöst. Die davon abhängigen Ansprüche beschreiben vorteilhafte Ausgestaltungen und Weiterbildungen der Erfindung.

Erfindungsgemäß führt eine auf einem Endgerät ausgeführte Applikation einen Direktzugriff auf einen mit dem Endgerät verbundenen portablen Speicherdatenträger durch, indem eine der Applikation zugeordnete Datei in dem Speicherdatenträger angelegt wird und die Applikation auf den von der Datei belegten Speicherbereich über eine Speicheradresse in dem Speicherbereich direkt zugreift. In diesem Zusammenhang ist unter einem "direkten Zugriff" oder einem "Direktzugriff" ein schreibender, lesender oder anderweitiger Speicherzugriff auf physische Speicheradressen des betreffenden Speicherdatenträgers unter Umgehung der logischen Speicherverwaltung eines Betriebssystems des Endgeräts zu verstehen. Insofern wird also zunächst die betreffende Datei gemäß den Vorgaben eines in dem Speicherdatenträger eingerichteten Dateisystems als logische Struktur angelegt, während der von der angelegten (logischen) Datei belegte Speicherbereich über dessen physischen Adressraum direkt angesprochen wird. Demzufolge beziehen sich die Begriffe "Datei" und Dateisystem" auf in einem logischen Adressraum angelegte logische Speicherstrukturen, die gegenüber der tatsächlichen physischen Speicherstruktur abstrahieren. Demgegenüber beziehen sich die Begriffe "Speicherbereich" und "Speicheradresse" auf den physischen Adressraum der tatsächlich in dem Speicherdatenträger vorhandenen Speicherzellen.

Ein Direktzugriff der Applikation auf den von der Datei belegten physischen Speicherbereich ist vor Zugriffskonflikten und Dateninkonsistenzen dadurch geschützt, dass das Betriebssystem des Endgeräts alle logischen Zugriffe anderer Applikationen oder Routinen auf die Datei über das Dateisystem kontrolliert und dadurch auf der physischen Ebene des Speichers Kollisionen mit einem Direktzugriff der Applikation vermeidet. Durch den Schutz der Datei als logische Speicherverwaltungsstruktur wird also mittelbar auch der physische Speicherbereich geschützt, der von der Datei belegt wird.

Beispielsweise können dadurch, dass das Betriebssystem der Applikation zumindest temporär besondere Zugriffsrechte für logische Zugriffe auf die Datei zuordnet, Zugriffskonflikte und Dateninkonsistenz vermieden werden, da die gegenüber der Applikation eingeschränkten Zugriffsrechte anderer Applikationen und Routinen die physischen Direktzugriffe der Applikation auf den von der Datei belegten Speicherbereich schützen bzw. diese priorisieren. Hierbei ist es insbesondere vorteilhaft, der Applikation exklusive Rechte für logische Schreibzugriffe auf die Datei zuzuordnen, um dadurch zumindest Schreibzugriffe anderer Applikationen oder Routinen auf die Datei und damit auch auf den von der Datei belegten physischen Speicherbereich zu verhindern.

Ein erfindungsgemäßes Endgerät umfasst zumindest ein Betriebssystem, einen Speicher, in dem beispielsweise die Applikation abgespeichert ist, einen Prozessor zur Ausführung der in dem Speicher vorliegenden Applikation sowie eine Datenkommunikationsschnittstelle zur Verbindung mit einem portablen Speicherdatenträger, mit dem das Endgerät eine erfindungsgemäße Datenkommunikationsanordnung bildet. Das Betriebssystem des Endgeräts ist derart eingerichtet, dass eine der Applikation zugeordnete Datei in dem mit dem Endgerät verbundenen Speicherdatenträger angelegt werden kann und die Applikation ist gleichzeitig derart eingerichtet, dass sie auf den von dieser Datei belegten Speicherbereich über eine Speicheradresse in dem Speicherbereich direkt zugreifen kann, d.h. über den physischen Adressraum des Speicherdatenträgers.

Da die Applikation bei einem Direktzugriff auf den von der Datei belegten Speicherbereich die Speicherverwaltung des Betriebssystems umgeht und deshalb eine physische Speicheradresse innerhalb des betreffenden Speicherbereichs angeben muss, ermittelt die Applikation vor dem Direktzugriff die Speicheradresse in dem von der Datei belegten Speicherbereich, entweder selbständig oder mit Unterstützung des Betriebssystems und dessen logischer Speicherverwaltung durch das Dateisystem.

Vorzugsweise stellt das Betriebssystem eine Indikatorfunktionalität für die Applikation bereit, über die die Applikation eine Speicheradresse in dem von der Datei belegten Speicherbereich für einen Direktzugriff ermitteln kann. Entsprechend ist die Applikation vorzugsweise derart eingerichtet, dass sie über die von dem Betriebssystem bereitgestellte Indikatorfunktionalität für einen Direktzugriff eine Speicheradresse in dem von der Datei belegten Speicherbereich ermittelt und dann auf den belegten Speicherbereich über diese ermittelte Speicheradresse direkt zugreift.

Bei der von dem Betriebssystem bereitgestellten Indikatorfunktionalität kann es sich um eine Betriebssystemroutine handeln, die die Applikation über einen entsprechenden Betriebssystemaufruf aufrufen kann, mit welchem die Applikation eine Speicheradresse in dem von der Datei belegten Speicherbereich anfordern kann. Alternativ kann die von dem Betriebssystem bereitgestellte Indikatorfunktionalität auch darin bestehen, dass das Betriebssystem beim Anlegen der der Applikation zugeordneten Datei eine oder mehrere vorgegebene Indikatorsequenzen an einer oder mehreren Speicheradressen in dem von der Datei belegten Speicherbereich hinterlegt, um diese als solche Speicheradressen zu markieren, auf die die Applikation direkt zugreifen kann. Diese Speicheradressen können dann über die Indikatorsequenzen von dem Betriebssystem oder vorzugsweise von der Applikation selbst in dem Speicherdatenträger aufgefunden werden, ohne dass auf die logische Struktur des Dateisystems mit der darin angelegten Datei zugegriffen werden muss.

Auch ist es möglich, dass die Applikation eine Speicheradresse in dem von der Datei belegten Speicherbereich selbständig und ohne eine von dem Betriebssystem bereitgestellte Indikatorfunktionalität ermittelt, indem die Applikation die vorgegebenen Indikatorsequenzen selbst in dem von der Datei belegten Speicherbereich hinterlegt, um ihn später identifizieren zu können. Alternativ kann die Applikation aber auch das logische Dateisystem des Speicherdatenträgers auswerten und dadurch physische Speicheradressen der angelegten Datei auffinden. Insbesondere sind auch Kombinationen aus den genannten Möglichkeiten zur Ermittlung einer gültigen Speicheradresse in dem von der Datei belegten Speicherbereich möglich.

Derartige für einen Direktzugriff ermittelte Speicheradressen können für weitere Direktzugriffe zwischengespeichert werden, beispielsweise in der der Applikation zugeordneten Datei selbst. Jedoch ist es in regelmäßigen Abständen notwendig, diese Speicheradressen zu überprüfen und gegebenenfalls erneut zu ermitteln, da die Speicherverwaltung des Betriebssystems z.B. mittels einer Speicherbereinigung (z.B. "Garbage Collection") dazu führen kann, dass der von der Datei belegte Speicherbereich physisch verschoben wird und dann veränderte Speicheradressen belegt, obwohl die Datei logisch unverändert bleibt.

Bei einem Direktzugriff der Applikation auf den von der Datei belegten Speicherbereich kann es sich um einen unbestimmten Direktzugriff, bei dem z.B. neue Daten an zunächst unbekannten, freien Speicheradressen in dem Speicherbereich abgelegt werden sollen, oder um einen bestimmten Direktzugriff handeln, bei dem z.B. Daten aus einer bestimmten Speicheradresse ausgelesen oder bestimmte Speicheradressen bei einem aktualisierenden Schreibzugriff überschrieben werden sollen.

Bei einem unbestimmten Direktzugriff der Applikation kann diese den von der Datei belegten Speicherbereich dadurch identifizieren, dass sie den gesamten Speicherdatenträger oder zumindest einen Teil des Speicherdatenträgers nach einer vorher hinterlegten, vorgegebenen Indikatorsequenz durchsucht und einen direkten Schreibzugriff in einen Speicherdatenblock oder einem Speichersektor vornimmt, der die gesuchte vorgegebene Indikatorsequenz umfasst. Hierbei können verschiedene vorgegebene Indikatorsequenzen verwendet werden, die neben der reinen Markierungsfunktion eine weitere Information tragen, beispielsweise den betreffenden Speicherdatenblock oder Speichersektor als "frei" oder "belegt" kennzeichnen, und die nach jedem direkten Schreibzugriff der Applikation entsprechend aktualisiert oder erneuert werden.

Bei einem bestimmten Direktzugriff auf Speicheradressen in dem belegten Speicherbereich, die der Applikation bereits bekannt sind, muss die Applikation lediglich diese Speicheradressen auf Vorliegen einer Indikatorsequenz prüfen. Falls dabei keine vorgegebene Indikatorsequenz gefunden werden kann, liegt unmittelbar eine Dateninkonsistenz vor, da an der betreffenden Speicheradresse bereits für die Applikation bestimmte Daten und insofern auch eine gültige Indikatorsequenz vorlagen. Eine derartige Dateninkonsistenz ist in der Regel dadurch entstanden, dass zwischenzeitlich eine andere Applikation oder Routine auf diese Speicheradresse über das Dateisystem zugegriffen hat, z.B. im Rahmen eines logischen Schreibzugriffs auf die der Applikation zugeordnete Datei, und dabei die Indikatorsequenz überschrieben wurde. Über das Vorliegen der Indikatorsequenz an der betreffenden Speicheradresse kann also eine Dateninkonsistenz erkannt werden, die durch ein zeitlich versetztes Zugreifen auf den von der Datei belegten Speicherbereich durch einen Direktzugriff der Applikation und einen logischen Zugriff über das Betriebssystem entsteht.

Darüber hinaus kann ein Zugriffskonflikt, der dadurch entstehen kann, dass ein logischer Zugriff über das Betriebssystem während des Prüfens von Indikatorsequenzen durch die Applikation vorgenommen wird, dadurch verhindert werden, dass die Applikation die in dem Dateisystem angelegte Datei vor dem Prüfen der Indikatorsequenz öffnet, so dass keine andere Applikation oder Routine während des Direktzugriffs der Applikation auf diese Datei und damit auch auf den betreffenden Speicherbereich schreibend oder lesend zugreifen kann. Das Öffnen der Datei kann die Applikation beispielsweise über einen entsprechenden Betriebssystemaufruf des Betriebssystems veranlassen.

Umgekehrt hat dieses Vorgehen auch den Vorteil, dass die Applikation auf den von der Datei belegten Speicherbereich dann nicht per Direktzugriff zugreifen kann, wenn bereits ein logischer Zugriff auf die der Applikation zugeordnete Datei über das Betriebssystem mit einem Öffnen der Datei eingeleitet wurde. In diesem Fall würde ein Versuch der Applikation, die Datei über das Dateisystem zu öffnen, scheitern, da sie bereits geöffnet ist. Vorzugsweise kann eine bestimmte Anzahl von wiederholten Versuchen, die Datei zu öffnen, vorgegeben werden, bevor der Direktzugriff der Applikation auf den von der Datei belegten Speicherbereich mit einer Fehlermeldung abgebrochen wird.

Wie oben bereits im Zusammenhang mit den bestimmten Direktzugriffen angesprochen wurde, kann vorgesehen sein, dass Indikatorsequenzen nicht nur beim Anlegen der Datei durch das Betriebssystem in dem Speicherbereich hinterlegt werden, sondern dass die betreffenden Indikatorsequenzen bei jedem Direktzugriff durch die Applikation erneuert oder geändert werden. Hierbei bietet es sich an, die jeweils zu hinterlegenden Indikatorsequenzen derart vorzugeben, dass eine weiterführende Information über den betreffenden Speicherbereich oder Speicherblock integriert wird, z.B. ein Zeitpunkt der letzten Manipulation, ein Speicherstatus, eine datenbezogene Information oder dergleichen. Insbesondere werden die Indikatorsequenzen von der Applikation oder dem Betriebssystem derart erzeugt, dass lediglich eine möglichst geringe Wahrscheinlichkeit verbleibt, dass die Bitfolge der betreffenden Indikatorsequenz auch in etwaigen in dem Speicherdatenträger vorliegenden Nutzdaten enthalten ist. Vorzugsweise wird zumindest bei jedem Schreibzugriff der Applikation auf eine Speicheradresse des von der Datei belegten Speicherbereichs eine neue Indikatorsequenz aktuell erzeugt, beispielsweise durch einen Zufallsgenerator.

Besonders bevorzugt werden die Indikatorsequenzen in dem von der Datei belegten Speicherbereich derart hinterlegt, dass eine technische oder anderweitige von der logischen Speicherstruktur des Dateisystems unabhängige Organisationsstruktur des Speicherdatenträgers berücksichtigt wird, beispielsweise eine Speicherdatenblockstruktur oder Speichersektoren. Eine solche Speicherstruktur kann z.B. dadurch berücksichtigt werden, dass in jedem Speicherdatenblock oder im jedem Speichersektor zumindest eine Indikatorsequenz hinterlegt wird, so dass block- oder sektorweise Direktzugriffe derart möglich sind, dass lediglich die vergleichsweise wenigen Speicheradressen des betreffenden Speicherdatenblocks oder Speichersektors nach Indikatorsequenzen durchsucht werden müssen, und nicht etwa der gesamte von der Datei belegte Speicherbereich.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den Zeichnungen, die zeigen:
- Fig.1: eine Datenkommunikationsanordnung, umfassend ein erfindungsgemäßes Endgerät mit einer ausführbaren Applikation und einen mit dem Endgerät verbundenen portablen Speicherdatenträger; sowie
- Fig. 2: eine schematische Darstellung eines Speichers eines portablen Speicherdatenträgers.

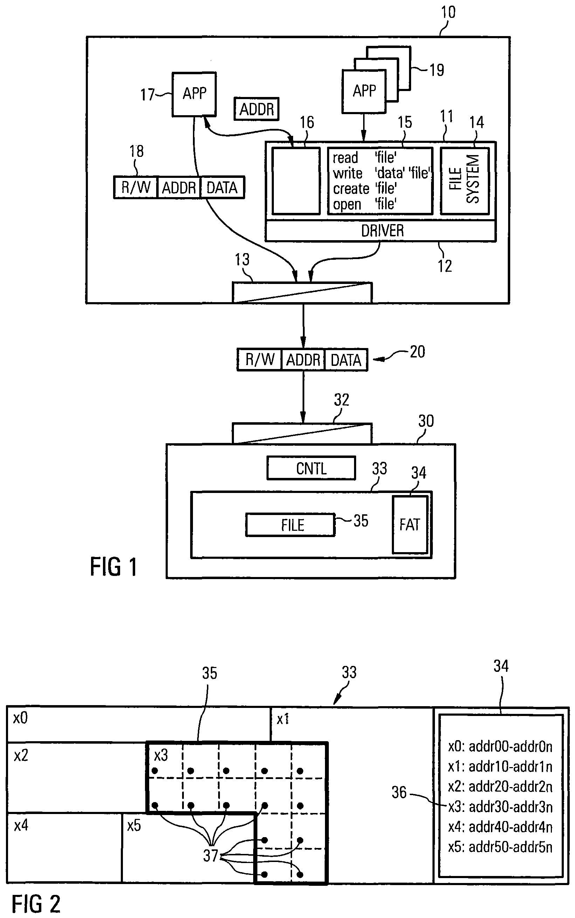

Fig.1 zeigt eine Datenkommunikationsanordnung bestehend aus einem Endgerät 10 und einem mit dem Endgerät 10 verbundenen portablen Speicherdatenträger 30. Hierbei sind jeweils nur diejenigen Komponenten des Endgeräts 10 und des Speicherdatenträgers 30 dargestellt, die für die vorliegende Erfindung von Bedeutung sind. Darüber hinaus besitzt sowohl das Endgerät 10 als auch der portable Speicherdatenträger 30 die im Zusammenhang mit derartigen Geräten üblichen weiteren Komponenten.

Unter einem Endgerät 10 ist nachfolgend eine computerbasierte Vorrichtung zu verstehen, die Software-/Hardware-Betriebsmittel für einen Nutzer des Endgeräts 10 bereitstellt, um über die Ausführung von auf dem Endgerät lauffähigen Applikationen 17,19 (APP) eine gewünschte Datenverarbeitung vorzunehmen. Ein derartiges Endgerät 10 kann ein nahezu beliebiges elektronisches, datenverarbeitendes Geräte sein, das über eine Datenkommunikationsschnittstelle 13 zum Anschließen eines Speicherdatenträgers 30 verfügt, wie zum Beispiel ein Personalcomputer, ein Notebook/Laptop, ein Host-Rechner für eine Mehrzahl von Nutzern oder insbesondere auch ein mobiles Endgerät, wie zum Beispiel ein Mobilfunkendgerät, ein persönlicher digitaler Assistent (PDA), eine Digitalkamera oder dergleichen.

Die Architektur des Endgeräts 10 basiert auf der üblichen Computerarchitektur und umfasst insbesondere ein Betriebssystem 11, das grundlegende Systemfunktionen bereitstellt, wie zum Beispiel eine Speicherverwaltung und Speicherzuteilung. Teil des Betriebssystems 11 ist insbesondere ein Dateisystem 14 (FILE SYSTEM) zur strukturierten Verwaltung der eigenen oder peripheren Speicher des Endgeräts 10, z.B. des Speichers 33 des portablen Speicherdatenträgers 30. Ebenso umfasst das Betriebssystem 11 einen Gerätetreiber 12 (DRIVER) zur Steuerung der Datenkommunikation mit einem über die Datenkommunikationsschnittstelle 13 angeschlossenen Peripheriegerät, wie zum Beispiel dem portablen Speicherdatenträger 30. Das Betriebssystem 11 stellt ferner Systemfunktionen 15,16 bereit, über die auf dem Endgerät 10 gespeicherte und auf einem Prozessor des Endgeräts 10 auszuführende Applikationen 17,19 auf Betriebsmittel des Endgeräts 10 zugreifen können, beispielsweise Funktionen 15 für einen schreibenden oder lesenden Zugriff auf einen eigenen oder peripheren Speicher des Endgeräts 10 oder zum Erzeugen oder Öffnen von in einem solchen Speicher über das Dateisystem 14 angelegten Dateien. Die Systemfunktion 16 stellt hierbei eine besondere Funktionalität bereit, über die die Applikation 17 einen Direktzugriff auf den peripheren Speicher 33 des Speicherdatenträgers 30 ausführen kann, also einen Speicherzugriff direkt auf die physische Ebene des Speichers 33 und unter Umgehung der von der Speicherverwaltung des Betriebssystems 11 und dem Dateisystems 14 bereitgestellten logischen Sicht des Speicher 33.

Unter einem portablen Speicherdatenträger 30 ist eine computerbasierte Einrichtung zu verstehen, deren Dimensionierung ein möglichst bequemes Mitführen durch einen Benutzer erlaubt. Ein solcher portabler Speicherdatenträger 30 dient in erster Linie dem Datentransport und hat zumeist keine weiterführenden Funktionalitäten oder ausgeprägte Benutzerschnittstellen in Form einer Tastatur oder einer Anzeigeneinrichtung. Typische portable Speicherdatenträger im Sinne der vorliegenden Erfindung sind beispielsweise Chipkarten, SmartCards, USB-Speicherelemente, sichere Multimediakarten (MMC), sichere digitale Speicherkarten (SD), Mobilfunkkarten (SIM) oder dergleichen.

Der portable Speicherdatenträger 30 umfasst insbesondere eine Datenkommunikationsschnittstelle 32 zum Verbinden mit der kompatiblen Datenkommunikationsschnittstelle 13 des Endgeräts 10, einen Controller 31 (CNTL) zur Steuerung der Speicherfunktionalität des Speicherdatenträgers 30 und der Datenkommunikation mit dem Endgerät 10 sowie einen nicht-flüchtigen wieder beschreibbaren Speicher 33, beispielsweise einen Flash-oder EEPROM-Speicher. Auf Seiten des Speicherdatenträgers 30 erfolgt die Verwaltung des Speichers 33 mittels einer Speicherbelegungstabelle 34 (FAT), die eine in dem Speicher 33 angelegte Verzeichnis- und Dateistruktur wiedergibt und eine Abbildung herstellt zwischen der von dem Betriebssystem 11 und dem Dateisystem 14 bereitgestellten logischen Speicherstruktur und der dahinter stehenden physischen Speicherstruktur des Speichers 33 und deren physischem Adressraum. Fig. 2 zeigt beispielhaft eine Belegung des Speichers 33 mit einer entsprechenden Speicherbelegungstabelle 34.

Die Speicherbelegungstabelle 34 muss nicht notwendigerweise im Speicher 33 vorliegen, sondern kann auch in einem separaten Speicher des Speicherdatenträgers 30 oder auch in einem geeigneten Speicher des Endgeräts 10 vorliegen. Die korrespondierenden Datenkommunikationsschnittstellen 13, 32 sind typischerweise kontaktbehaftet, können jedoch auch kontaktlos ausgestaltet sein. Sie sind insbesondere universelle Startschnittstellen, wie zum Beispiel USB-Schnittstellen, oder auf den konkreten Typ des Speicherdatenträgers 30 abgestimmte Schnittstellen, etwa Multimediakarten-, Speicherkarten-, Mobilfunkkarten- oder sonstige Schnittstellen. Zur Durchführung einer Datenkommunikation zwischen dem Endgerät 10 und dem Speicherdatenträger 30 über die Schnittstellen 13, 32 wird ein geeignetes, auf den Speicher 33 abgestimmtes Datenübertragungsprotokoll eingesetzt.

Das Betriebssystem 11 des Endgeräts 10 ist ein für computerbasierte Endgeräte verbreitetes Betriebssystem, wie zum Beispiel Windows, Linux, eine Java-Plattform oder dergleichen. Es führt die Applikationen 17,19 aus, welche Nutzfunktionen realisieren, die auch Zugriffe auf Speicher des Endgeräts 10, insbesondere auf den peripheren Speicher 33 des Speicherdatenträgers 30 zur Folge haben können. Bei der Ausführung der Applikationen 17,19 werden insofern die von dem Betriebssystem 11 bereitgestellten logischen Speicherzugriffs- und -verwaltungsfunktionen 15 im Zusammenhang mit dem Dateisystem 14 und der Speicherbelegungstabelle 34 verwendet, um in dem physischen Speicher 33 eine logische Verzeichnis- und Dateistruktur anzulegen, derartige Verzeichnisse oder Dateien zu öffnen, Daten daraus auszulesen oder darin einzuschreiben.

Dabei ist das Dateisystem 14 dem Betriebssystems 11 unmittelbar zugeordnet und verwaltet einen oder mehrere (transparente) Speicher des Endgeräts 10 und der angeschlossenen Peripheriegeräte und Speicherdatenträger 30. Logische Zugriffe auf den Speicher 33 über das Dateisystem 14 erfolgen anhand des jeweiligen logischen Dateibezeichners bzw. Dateinamens mittels standardisierter Zugriffsbefehle, wie zum Beispiel "write 'data' 'file'" (Schreiben), "read 'file'" (Lesen), "open 'file'" (Öffnen) oder "create 'file'" (Erzeugen) oder dergleichen. Ein solcher über das Betriebssystem 11 ausgeführter logischer Zugriffsbefehl 15 wird von dem Dateisystem 14 mittels eines geeigneten Gerätetreibers 12 in einen physischen Zugriff auf den von dem Dateisystem 14 verwalteten Speicher 33 umgesetzt. Das Dateisystem 14 verwaltet dabei gegenüber dem Betriebssystem 11 auch die Speicherbelegungstabelle 34, die die Zuordnung der von dem Dateisystem 14 angelegten logischen Speicherstruktur und dem demgegenüber transparenten physischen Adressraum des Speichers 33 herstellt.

Zur Ausführung eines vom Betriebssystem 11 übermittelten logischen Zugriffsbefehls 15 auf den Speicher 33 benutzt das Dateisystem 14 den Gerätetreiber 12, der entweder, wie dargestellt, als Teil des Betriebssystems 11 oder separat davon ausgestaltet sein kann. Dieser setzt die logischen Zugriffsbefehle 15 in für den Controller 31 des Speicherdatenträgers 30 interpretierbare Befehle 20 um. Diese Befehle 20 umfassen in der Regel physische Speicheradressen (ADDR) des von dem jeweiligen Befehl 20 angesprochenen Speicherbereichs, sowie eine Angabe über den Typ des Zugriffsbefehls 20, beispielsweise darüber, ob ein Schreib- oder ein Lesebefehl vorliegt (R/W). Die dem Befehl 20 zugeordneten Daten (DAT) werden dann datenblockweise übermittelt, und an die betreffende physische Speicheradresse (ADDR) des Speichers 33 geschrieben. Der Controller 31 des Speicherdatenträgers 30 setzt wiederum die über die Datenkommunikationsschnittstelle 32 eingehende Zugriffsbefehle 20 in entsprechende Zugriffe auf Speicheradressen des Speichers 33 um. Zur Vorbereitung dieser Speicherzugriffe im Endgerät 10 übermittelt er dem Dateisystem 14 dazu für gewöhnlich die Speicherbelegungstabelle 34.

Neben solchen logischen Speicherzugriffen über die Speicherzugriffsbefehle 15 besteht auch die Möglichkeit, dass eine ausgewählte Applikation 17 einen Direktzugriff auf den Speicher 33 des Speicherdatenträgers 30 unter Umgehung der Speicherverwaltungsmechanismen des Betriebssystems 11 und des Dateisystems 14 vornimmt. Derartige Direktzugriffe auf den physischen Adressraum des Speichers 33 werden üblicherweise über eine Blockadressierung durchgeführt, so dass mit einem Direktzugriff ein oder mehrere Speicherblöcke ausgelesen oder überschrieben werden.

Zugriffskonflikte und Dateninkonsistenzen, die dadurch auftreten können, dass einerseits Direktzugriffe der Applikation 17 auf den Speicher 33 nicht der Speicherverwaltung des Betriebssystems 11 unterliegen und deshalb von diesem nicht erkannt werden können und andererseits die Applikation 17 auch keine logischen Zugriffe auf den Speicher 33 über die Zugriffsfunktionen 15 erkennt, werden dadurch verhindert, dass die Direktzugriffe der Applikation 17 ausschließlich in denjenigen Speicherbereich erfolgen, der von einer Datei 35 (FILE) belegt wird, welche eigens zum Zwecke der Synchronisation von direkten und logischen Zugriffen angelegt und der Applikation 17 zugeordnet wurde. Selbstverständlich gilt dies nur für den Fall, daß durch den Zugriff Daten verändert werden; ein rein lesender Zugriff ist auch außerhalb der Datei 35 (FILE) gestattet.

Diese Datei 35 wird von dem Betriebssystem 11 in der herkömmlichen Weise als logische Struktur über das Dateisystem 14 angelegt, z.B. mittels des Befehls "create 'file'" 15, und in der Speicherbelegungstabelle 34 verzeichnet. In diesem Zusammenhang zeigt Fig. 2 die Datei 35 und den von ihr belegten Speicherbereich x3 sowie den entsprechenden Eintrag 36 in der Speicherbelegungstabelle 34, der die physischen Speicheradressen *addr30* bis *addr3n* des von der Datei 35 belegten Speicherbereichs x3 wiedergibt. Direktzugriffe der Applikation 17 auf Speicheradressen des Speichers 33 erfolgen dann ausschließlich in den von der Datei 35 belegten Speicherbereich x3 bzw. in den zugehörigen Adressraum *addr30* bis *addr3n,* so dass ein Direktzugriff auf den physischen Speicherbereich x3 möglich ist, der jedoch gleichzeitig mittels der übergeordneten, dem Dateisystem 14 bekannten und in der Speicherbelegungstabelle 34 verzeichneten logischen Datei 35 durch die Schutzmechanismen und die Zugriffspolitik des Betriebssystems 11 geschützt ist.

Diese Hybridlösung von Direktzugriffen in den physischen Speicherbereich x3 einer logisch angelegten Datei ermöglicht die Synchronisation zwischen Direktzugriffen der Applikation 17 und logischen Zugriffen über die Zugriffsbefehle 15 des Betriebssystems 11, da die Speicherverwaltung des Betriebssystems 11 die Datei 35 der Applikation 17 logisch zuordnen kann, so dass logische Speicherzugriffe anderer Applikationen 19 auf diese Datei 35 reguliert und eingeschränkt werden können. Dazu können der Applikation 17 von dem Betriebssystem 11 insbesondere exklusive Zugriffsrechte zugewiesen werden, so dass andere Applikationen 19 zumindest nicht durch einen logischen Zugriff in die Datei 35 schreiben können.

Bei einem Direktzugriff der Applikation 17 auf den von der Datei 35 belegten Speicherbereich x3 in dem Speicher 33 kann die Applikation 17 zur Ausführung des Direktzugriffs eine oder mehrere physische Speicheradressen "addr3i" ermitteln, die innerhalb des Adressraums *addr30* bis *addr3n* des von der Datei 35 belegten Speicherbereichs x3 liegen. Dies kann beispielsweise dadurch geschehen, dass das Betriebssystem 11 eine Funktionalität bereitstellt, z.B. in Form der Systemfunktion 16, die der Applikation 17 auf Anfrage eine physische Adresse *addr3i* innerhalb des gewünschten Speicherbereichs x3 der Datei 35 liefert. Dazu kann das Betriebssystem 11 über das Dateisystem 14 und die Speicherbelegungstabelle 34 die zu dem von der Datei 35 belegten Speicherbereich x3 zugehörigen physischen Speicheradressen *addr30* bis *addr3n* ermitteln und an die Applikation 17 zurückliefern. Ebenso gut kann die Applikation 17 selbst die erforderlichen Speicheradressen ermitteln, beispielsweise indem die Applikation 17 die Art des Dateisystems 14 erkennt und auf dem portablen Speicherdatenträger 30 eine geeignete Speicheradresse *addr3i* der Datei 35 ermittelt, beispielsweise durch selbständiges Auslesen des entsprechenden Eintrags 36 aus der Speicherbelegungstabelle 34.

Eine weitere Möglichkeit des Betriebssystems 11, über die Systemfunktion 16 ein Ermitteln von geeigneten physischen Speicheradressen *add3i* im Adressraum *addr30* bis *addr3n* durch die Applikation 17 zu ermöglichen, besteht darin, dass die Systemfunktion 16 beim Anlegen der Datei 35 eine oder mehrere so genannte Indikatorsequenzen 37 ("Magic Words") in den von der Datei 35 belegten Speicherbereich x3 des Speichers 33 einbringt, welche aus besonders charakteristischen, längeren Bitfolgen bestehen, z.B. aus Datenwörten einer Länge von 32 Bytes. Bei einem Direktzugriff durch die Applikation 17 auf den von der Datei 35 belegten Speicherbereich x3 kann diese eine gültige Speicheradresse in dem von der Datei 35 belegten Speicherbereich x3 ermitteln oder prüfen, ob eine derartige Indikatorsequenz 37 an einer der Applikation bekannten Speicheradresse *addr3i* oder einer anderen Speicheradresse eines Speicherdatenblocks vorliegt und dadurch feststellen, ob eine gültige Speicheradresse *addr3i* innerhalb des Speicherbereichs x3 durch den Direktzugriff angesprochen wird.

Nach der Ermittlung eine Speicheradresse in dem von der Datei 35 belegten Speicherbereich x3 bildet die Applikation 17 einen Direktzugriffsbefehl 18, der vorzugsweise ähnlich zu dem von dem Gerätetreiber 12 erzeugten Befehl 20 einen Kommandoanteil (R/W), einen Datenanteil (DATA) sowie einen Adressanteil (ADDR) aufweist, der unabhängig von der von dem Dateisystem 14 vorgegebenen logischen Speicherstruktur in den physischen Adressraum *addr30* bis *addr3n* des Speichers 33 zeigt.

Bei derartigen Direktzugriffen der Applikation 17 kann unterschieden werden zwischen einem bestimmten Direktzugriff der Applikation 17 auf eine oder mehrere der Applikation 17 bereits bekannte Speicheradressen (z.B. bei Auslesen oder Überschreiben von vorgegebenen Speicheradressen) und einem unbestimmten Direktzugriff auf eine beliebige, der Applikation 17 vorher nicht bekannte Speicheradresse in dem von der Datei 35 belegten Speicherbereich x3 (z.B. beim Ablegen von Daten an einer freien Speicheradresse). Diese Direktzugriffe werden nachfolgend im Zusammenhang mit Fig. 2 erläutert, die eine Speicherbelegung des Speichers 33 schematisch zeigt, bei der in dem Speicher 33 sechs Dateien x0 bis x5 angelegt sind, die jeweils in der Speicherbelegungstabelle 34 mit ihren physischen Adressen verzeichnet sind.

Hierbei ist der Speicherbereich x3 über den Eintrag 36 in der Speicherbelegungstabelle 34 der vom Betriebssystem 11 angelegten Datei 35 zugeordnet und steht für Direktzugriffe der Applikation 17 zur Verfügung. Der Speicherbereich x3 ist in mehrere Speicherblöcke unterteilt (strichliniert angedeutet), die vorzugsweise jeweils eine Indikatorsequenz 37 aufweisen, an der die Applikation 17 erkennen kann, dass der betreffende Speicherblock und dessen Speicheradresse(n) zu dem Speicherbereich x3 gehört. Die Kennzeichnung durch die Indikatorsequenzen 37 ist nützlich, da die Datei 35 lediglich eine von dem Betriebssystem 11 bzw. dem Dateisystem 14 angelegte logische Speicherverwaltungsstruktur repräsentiert und als solche auf der Ebene der physischen Direktzugriffe nicht erkennbar ist.

Bei einem bestimmten, blockweisen Direktzugriff auf eine vorgegebene Speicheradresse in den Speicherbereich 35 prüft die Applikation 17 zunächst, ob in dem betreffenden Speicherblock eine Indikatorsequenz 37 vorliegt. Ist dies der Fall, so kann die Applikation 17 den gewünschten direkten Schreib- oder Lesezugriff unmittelbar durchführen, da er in einen zulässigen Speicherblock innerhalb des der Applikation 17 zugeordneten Speicherbereichs x3 zielt.

Bei einem unbestimmten Direktzugriff ist es jedoch erforderlich, dass die Applikation 17 eine oder mehrere zunächst unbekannte Speicheradressen bzw. Speicherblöcke innerhalb des Speicherbereichs x3 anhand der hinterlegten Indikatorsequenzen 37 ermittelt, indem der gesamte Speicher 33 oder zumindest ein vorgegebener oder heuristisch festgelegter Anteil des Speichers 33 solange durchsucht wird, bis geeignete Speicherblöcke mit einer Indikatorsequenz 37 identifiziert werden können. Ein Durchsuchen größerer Anteile des Speichers 33 kann insbesondere auch dann notwendig sein, wenn der von der Datei 35 belegte Speicherbereich x3 durch das Betriebssystem 11 infolge einer Speicherbereinigung (z.B. einer "Garbage Collection") oder einer Speicherkompaktierung verschoben wurde und inzwischen andere physische Speicheradressen umfasst. Zum Kenntlichmachen der Speicherblöcke des Speicherbereichs x3 auch nach einer Verschiebung durch das Betriebssystem 11 können die Indikatorsequenzen 37 neben ihrer eigentlichen Markierungsfunktion noch weitere Informationen vermitteln, z.B. ob es sich bei dem betreffenden Speicherblock um einen bereits belegten oder noch freien Speicherblock handelt oder dergleichen.

Abhängig von der Art der Speicherverwaltung und -bereinigung des Speichers 33 durch das Betriebssystem 11 kann es zweckmäßig sein, einmal ermittelte Speicheradressen in dem Speicherbereich x3 zwischenzuspeichern, beispielsweise an einer ausgewählten konstanten Speicheradresse *addr3k* in dem Speicherbereich x3 oder in den verbleibenden Speicherbereichen des Speichers 33. Diese zwischengespeicherten Speicheradressen müssen jedoch in regelmäßigen Abständen verifiziert werden und zwar umso öfter, desto größer die Wahrscheinlichkeit einer Speicherbereinigung und einer dadurch verursachten Verschiebung des Speicherbereichs x3 ist. In solchen Fällen kann dann bei der Ermittlung einer geeigneten Speicheradresse in dem Speicherbereich x3 beispielsweise ähnlich wie bei einem unbestimmten Direktzugriff vorgegangen werden, da die geänderten physischen Speicheradressen des von der Datei 35 belegten Speicherbereichs x3 vor einem Direktzugriff erneut ermittelt werden müssen. Alternativ können die geänderten Speicheradressen auch von einer Funktion des Betriebssystems ermittelt oder in einer Speicherbelegungstabelle abgelegt werden.

Ein anderes Szenario kann eintreten, wenn eine andere Applikation 19 infolge eines logischen Zugriffs auf die Datei 35 einen in dem Speicherbereich x3 befindlichen Speicherblock überschreibt und dadurch auch die Indikatorsequenz 37 löscht. Ein solcher regulär überschriebener Speicherdatenblock kann dann bei einem (bestimmten) Direktzugriff nicht ohne weiteres von der Applikation 17 überschrieben werden, da dies zu einer Dateninkonsistenz führen würde. Vielmehr wird entweder der Direktzugriff mit einer Fehlermeldung abgebrochen oder eine Konsistenzprüfung der Applikation 37 oder des Betriebssystems 11 korrigiert etwaige überschriebene oder fehlerhafte Indikatorsequenzen 37 in dem Speicherbereich x3.

Eine Indikatorsequenz 37 wird vorzugsweise von der Applikation 17 erzeugt oder von einer hierfür eingerichteten weiteren Funktion, die z.B. das Betriebssystem 11 bereitstellen kann. Dabei wird die Indikatorsequenz 37 derart vorgegeben, dass sie ein möglichst unwahrscheinliches Bitmuster aufweist, so dass die Wahrscheinlichkeit minimal ist, dass von dem Betriebssystem 11 in dem Speicher 33 regulär abgelegte Nutzdaten das gleiche Bitmuster aufweisen und dadurch aufgrund von Fehlzugriffen der Applikation 17 Dateninkonsistenzen verursachen würden. Vorzugsweise werden die Indikatorsequenzen 37 nicht nur einmalig bei der Erzeugung der Datei 35 in dem Speicherbereich x3 hinterlegt, sondern werden regelmäßig oder nach jedem Direktzugriff erneuert oder geändert, beispielsweise indem bei jedem Direktzugriff eine neue Indikatorsequenz 37 erzeugt und hinterlegt wird. Hierbei kann es vorteilhaft sein, in die Indikatorsequenzen 37 weitere Informationen über den jeweiligen Speicherdatenblock einzubringen, z.B. den Zeitpunkt der letzten Aktualisierung des Speicherdatenblocks, einen Belegungsstatus oder dergleichen. Vorzugsweise können die Indikatorsequenzen 37 mittels eines Zufallsgenerators erzeugt werden, wobei gegebenenfalls die weiteren Informationen über den entsprechenden Speicherdatenblock in das zufällige Bitmuster integriert werden.

Um Zugriffskonflikte während des Direktzugriffs zu verhindern, z.B. solche, die bei einem logischen Zugriff auf die Datei 35 über eine Betriebssystemfunktion 15 während der Prüfung auf Vorliegen einer Indikatorsequenz 37 im Rahmen eines Direktzugriffs durch die Applikation 17 entstehen könnten, kann die Applikation 17 kurz vor oder während des Direktzugriffs ein Öffnen der Datei 25 entweder selbständig oder vorzugsweise über das Betriebssystem 11 veranlassen, so dass andere Applikationen 19 von jedwedem logischen Zugriff auf die Datei 35 und den Speicherbereich x3 ausgeschlossen sind, solange die Datei 35 geöffnet ist. Sofern das Öffnen der Datei 35 durch die Applikation 17 fehlschlägt, kann angenommen werden, dass die Datei 35 infolge eines logischen Zugriffs über eine Betriebssystemfunktion 15 bereits vorher geöffnet wurde. In diesem Fall unterbricht die Applikation 17 den Direktzugriff solange, bis sich die Datei 35 wieder öffnen lässt. Hierbei kann eine bestimmte Anzahl von Öffnungsversuchen vorgegeben werden, nach deren Erreichen das Öffnen der Datei 35 auf Veranlassung der Applikation 17 abgebrochen wird und gegebenenfalls eine Fehlermeldung zurückgegeben wird.

## Patentansprüche

1. Verfahren zum Direktzugriff auf einen Speicherbereich (x3) eines mit einem Endgerät (10) verbundenen portablen Speicherdatenträgers (30) durch eine auf dem Endgerät (10) ausgeführte Applikation (17), **dadurch gekennzeichnet, dass** in dem Speicherdatenträger (30) eine der Applikation (17) zugeordnete Datei (35) angelegt wird, die Applikation (17) auf den von der Datei (35) belegten Speicherbereich (x3) über eine Speicheradresse in dem Speicherbereich (x3) direkt zugreift, die Applikation (17) eine Speicheradresse in dem von der Datei (35) belegten Speicherbereich (x3) für einen Direktzugriff ermittelt und dass die Applikation (17) bei einem Direktzugriff auf den von der Datei (35) belegten Speicherbereich (x3) das Vorliegen zumindest einer vorgegebenen Indikatorsequenz (37) in dem Speicherdatenträger (30) prüft, wobei die zumindest eine Indikatorsequenz (37) Speicheradressen in dem von der Datei (35) belegten Speicherbereich (x3) markiert und derart vorgegeben ist, dass die Wahrscheinlichkeit minimiert wird, dass in dem Speicherdatenträger (30) vorliegende Nutzdaten eine mit der zumindest einen Indikatorsequenz (37) identische Datensequenz umfassen.

2. Verfahren nach Anspruch 1, **dadurch gekennzeichnet, dass** die Datei (35) durch ein Betriebssystem (11) des Endgeräts (10) gemäß einem auf dem Speicherdatenträger (30) eingerichteten Dateisystem (14) angelegt wird.

3. Verfahren nach Anspruch 2, **dadurch gekennzeichnet, dass** die Datei (35) der Applikation (17) derart zugeordnet wird, dass das Betriebssystem (11) zumindest Schreibzugriffe anderer Applikationen (19) auf die Datei (35) verhindert.

4. Verfahren nach Anspruch 3, **dadurch gekennzeichnet, dass** die ermittelte Speicheradresse für nachfolgenden Direktzugriffe der Applikation (17) zwischengespeichert wird, vorzugsweise in dem von der Datei (35) belegten Speicherbereich (x3).

5. Verfahren nach Anspruch 3 oder 4, **dadurch gekennzeichnet, dass** die Applikation (17) eine Speicheradresse in dem von der Datei (35) belegten Speicherbereich (x3) mittels einer Betriebssystemfunktion (15) oder mittels einer Auswertung eines Dateisystems (14) des Speicherdatenträgers (30) ermittelt.

6. Verfahren nach einem der vorhergehenden Ansprüche, **dadurch gekennzeichnet, dass** die Applikation (17) bei einem Direktzugriff auf eine oder mehrere bestimmte Speicheradressen in dem von der Datei (35) belegten Speicherbereich (x3) prüft, ob an zumindest einer der bestimmten Speicheradressen eine Indikatorsequenz (37) vorliegt, und eine Dateninkonsistenz feststellt, falls dort keine Indikatorsequenz (37) vorliegt.

7. Verfahren nach Anspruch 6, **dadurch gekennzeichnet, dass** die Applikation (17) beim Prüfen, ob in dem Speicherdatenträger (30) oder an einer oder mehreren bestimmten Speicheradressen in dem von der Datei (35) belegten Speicherbereich (x3) eine Indikatorsequenz (37) vorliegt, ein Öffnen der Datei (35) veranlasst, um einen konkurrierenden Schreibzugriff über ein Betriebssystem (11) des Endgeräts (10) auf die Datei (35) zu verhindern.

8. Verfahren nach einem der Ansprüche 6 oder 7, **dadurch gekennzeichnet, dass** beim Anlegen der Datei (35) zumindest eine vorgegebene Indikatorsequenz (37) an zumindest einer Speicheradresse in dem von der Datei (35) belegten Speicherbereich (x3) hinterlegt wird.

9. Verfahren nach einem der vorhergehenden Ansprüche, **dadurch gekennzeichnet, dass** bei einem Direktzugriff auf den von der Datei (35) belegten Speicherbereich (x3) durch die Applikation (17) zumindest eine vorgegebene Indikatorsequenz (37) an zumindest einer Speicheradresse in dem von der Datei (35) belegten Speicherbereich (x3) erneuert oder geändert wird.

10. Verfahren nach Anspruch 8 oder 9, **dadurch gekennzeichnet, dass** beim Hinterlegen von vorgegebenen Indikatorsequenzen (37) in dem von der Datei (35) belegten Speicherbereich (x3) jeweils unterschiedliche Indikatorsequenzen (37) vorgegeben werden.

11. Verfahren nach einem der Ansprüche 8 bis 10, **dadurch gekennzeichnet, dass** beim Hinterlegen von zumindest einer Indikatorsequenz (37) an zumindest einer Speicheradresse in dem von der Datei (35) belegten Speicherbereich (x3) in im Wesentlichen jedem Speicherdatenblock des Speicherbereichs (x3) eine Indikatorsequenz (37) hinterlegt wird und die Applikation (17) auf den von der Datei (35) belegten Speicherbereich (x3) speicherblockweise zugreift.

12. Endgerät (10), umfassend zumindest ein Betriebssystem (11), einen Speicher, einen Prozessor zur Ausführung einer in dem Speicher vorliegenden Applikation (17) sowie eine Datenkommunikationsschnittstelle (13) zur Verbindung mit einem portablen Speicherdatenträger (30), **dadurch gekennzeichnet, dass** das Betriebssystem (11) eingerichtet ist, eine der Applikation (17) zugeordnete Datei (35) in dem mit dem Endgerät (10) verbundenen Speicherdatenträger (30) anzulegen und eine Indikatorfunktionalität (16) bereitzustellen, über die die Applikation (17) eine Speicheradresse in dem von der Datei (35) belegten Speicherbereich (x3) für einen Direktzugriff auf den belegten Speicherbereich (x3) ermitteln kann, dass die Applikation (17) eine Speicheradresse in dem von der Datei (35) belegten Speicherbereich (x3) für einen Direktzugriff ermittelt kann und dass die Applikation (17) bei einem Direktzugriff auf den von der Datei (35) belegten Speicherbereich (x3) das Vorliegen zumindest einer vorgegebenen Indikatorsequenz (37) in dem Speicherdatenträger (30) prüfen kann, wobei die zumindest eine Indikatorsequenz (37) Speicheradressen in dem von der Datei (35) belegten Speicherbereich (x3) markieren und derart vorgeben kann, dass die Wahrscheinlichkeit minimiert wird, dass in dem Speicherdatenträger (30) vorliegende Nutzdaten eine mit der zumindest einen Indikatorsequenz (37) identische Datensequenz umfassen.

13. Computerprogrammprodukt, das eingerichtet ist, von dem Endgerät (10) nach Anspruch 12 als Applikation (17) ausgeführt zu werden, **dadurch gekennzeichnet, dass** das Computerprogrammprodukt ferner eingerichtet ist, als ausgeführte Applikation (17) eine Speicheradresse in dem von der Datei (35) belegten Speicherbereich (x3) zu ermitteln, auf den belegten Speicherbereich (x3) über die ermittelte Speicheradresse direkt zuzugreifen und ferner eingerichtet ist, als ausgeführte Applikation (17) eine Speicheradresse in dem von der Datei (35) belegten Speicherbereich (x3) für einen Direktzugriff zu ermitteln und bei einem Direktzugriff auf den von der Datei (35) belegten Speicherbereich (x3) das Vorliegen zumindest einer vorgegebenen Indikatorsequenz (37) in dem Speicherdatenträger (30) zu prüfen, wobei die zumindest eine Indikatorsequenz (37) Speicheradressen in dem von der Datei (35) belegten Speicherbereich (x3) markiert und derart vorgegeben ist, dass die Wahrscheinlichkeit minimiert wird, dass in dem Speicherdatenträger (30) vorliegende Nutzdaten eine mit der zumindest einen Indikatorsequenz (37) identische Datensequenz umfassen.

14. Endgerät (10) nach Anspruch 12 mit einem als Applikation (17) ausführbarem Computerprogrammprodukt nach Anspruch 13, **dadurch gekennzeichnet, dass** das Endgerät (10) und das als Applikation (17) ausgeführte Computerprogrammprodukt derart eingerichtet sind, dass sie gemäß einem Verfahren nach einem der Ansprüche 1 bis 11 in Wechselwirkung treten können.

## Claims

1. A method for direct access to a memory area (x3) of a portable data storage medium (30) connected to a terminal (10) by an application (17) executed on the terminal (10), **characterized in that** in the data storage medium (30) a file (35) is created that is assigned to the application (17), the application (17) directly accesses the memory area (x3) occupied by the file (35) via a memory address in the memory area (x3), the application (17) ascertains a memory address in the memory area (x3) occupied by the file (35) for a direct access, and that the application (17), upon a direct access to the memory area (x3) occupied by the file (35), checks the presence of at least one predetermined indicator sequence (37) in the data storage medium (30), wherein the at least one indicator sequence (37) marks memory addresses in the memory area (x3) occupied by the file (35) and is predetermined such that the probability is minimized that payload data present in the data storage medium (30) comprise a data sequence that is identical to the at least one indicator sequence (37).

2. The method according to claim 1, **characterized in that** the file (35) is created by an operating system (11) of the terminal (10) in accordance with a file system (14) set up on the data storage medium (30).

3. The method according to claim 2, **characterized in that** the file (35) is so assigned to the application (17) that the operating system (11) prevents at least write accesses by other applications (19) to the file (35).

4. The method according to claim 3, **characterized in that** the ascertained memory address is intermediately stored for subsequent direct accesses by the application (17), preferably in the memory area (x3) occupied by the file in the (35).

5. The method according to claim 3 or 4, **characterized in that** the application (17) ascertains a memory address in the memory area (x3) occupied by the file (35) by means of an operating system function (15) or by means of an evaluation of a file system (14) of the data storage medium (30).

6. The method according to any of the preceding claims, **characterized in that** the application (17), upon a direct access to one or several specific memory addresses in the memory area (x3) occupied by the file (35), checks whether there is an indicator sequence (37) present at at least one of the ascertained memory addresses, and determines a data inconsistency, if no indicator sequence (37) is present there.

7. The method according to claim 6, **characterized in that** upon checking whether an indicator sequence (37) is present in the data storage medium (30) or at one or several specific memory addresses in the memory area (x3) occupied by the file (35), the application (17) causes an opening of the file (35) to prevent a competing write access to the file (35) via an operating system (11) of the terminal (10).

8. The method according to any of the claims 6 or 7, **characterized in that** upon creating the file (35) at least one predetermined indicator sequence (37) is stored at least at one memory address in the memory area (x3) occupied by the file (35).

9. The method according to any of the preceding claims, **characterized in that** upon a direct access to the memory area (x3) occupied by the file (35) by the application (17), at least one predetermined indicator sequence (37) is renewed or changed at least at one memory address in the memory area (x3) occupied by the file (35).

10. The method according to claim 8 or 9, **characterized in that** upon storing predetermined indicator sequences (37) in the memory area (x3) occupied by the file (35), different indicator sequences (37) are predetermined in each case.

11. The method according to any of the claims 8 to 10, **characterized in that** upon storing at least one indicator sequence (37) at least at one memory address in the memory area (x3) occupied by the file (35), there is stored an indicator sequence (37) in substantially each memory data block of the memory area (x3), and the application (17) accesses the memory area (x3) occupied by the file (35) memory block by memory block.

12. A terminal (10) comprising at least one operating system (11), a memory, a processor for executing an application (17) present in the memory, and a data communication interface (13) for connection to a portable data storage medium (30), **characterized in that** the operating system (11) is adapted to create a file (35) assigned to the application (17) in the data storage medium (30) connected to the terminal (10), and to make available an indicator functionality (16) through which the application (17) can ascertain a memory address in the memory area (x3) occupied by the file (35) for direct access to the occupied memory area (x3), that the application (17) can ascertain a memory address in the memory area (x3) occupied by the file (35) for a direct access to the occupied memory area (x3) and that the application (17), upon a direct access to the memory area (x3) occupied by the file (35), can check the presence of at least one predetermined indicator sequence (37) in the data storage medium (30), wherein the at least one indicator sequence (37) can mark and so predetermine memory addresses in the memory area (x3) occupied by the file (35) that the probability is minimized that payload data present in the data storage medium (30) comprise a data sequence that is identical to the at least one indicator sequence (37).

13. A computer program product that is adapted to be executed by the terminal (10) according to claim 12 as an application (17), **characterized in that** the computer program product is further adapted, as an executed application (17), to ascertain a memory address in the memory area (x3) occupied by the file (35), to directly access the occupied memory area (x3) via the ascertained memory address, and is further adapted, as an executed application (17), to ascertain a memory address in the memory area (x3) occupied by the file (35) for a direct access, and, upon a direct access to the memory area (x3) occupied by the file (35), to check the presence of at least one predetermined indicator sequence (37) in the data storage medium (30), wherein the at least one indicator sequence (37) marks memory addresses in the memory area (x3) occupied by the file (35) and is so predetermined that the probability is minimized that payload data present in the data storage medium (30) comprise a data sequence that is identical to the at least one indicator sequence (37).

14. A terminal (10) according to claim 12 with a computer program product according to claim 13 executable as an application (17), **characterized in that** the terminal (10) and the computer program product executed as an application (17) are adapted-such that they can interact in accordance with a method according to any of the claims 1 to 11.

## Revendications

1. Procédé d'accès direct à une zone mémoire (x3) d'un support de données mémoire (30) portable relié à un terminal (10), par une application (17) exécutée sur le terminal (10), **caractérisé en ce que**, dans le support de données mémoire (30), un fichier (35) affecté à l'application (17) est créé, **en ce que** l'application (17) accède directement, par une adresse mémoire dans la zone mémoire (x3), à la zone mémoire (x3) occupée par le fichier (35), **en ce que** l'application (17) détermine, pour un accès direct, une adresse mémoire dans la zone mémoire (x3) occupée par le fichier (35) et **en ce que** l'application (17), lors d'un accès direct à la zone mémoire (x3) occupée par le fichier (35), vérifie la présence d'au moins une séquence d'indicateur (37) préétablie dans le support de données mémoire (30), cependant que la au moins une séquence d'indicateur (37) marque des adresses mémoire dans la zone mémoire (x3) occupée par le fichier (35) et est préétablie de telle façon que la probabilité que des données utiles présentes dans le support de données mémoire (30) comprennent une séquence de données identique à la au moins une séquence d'indicateur (37) est minimisée.

2. Procédé selon la revendication 1, **caractérisé en ce que** le fichier (35) est placé par un système d'exploitation (11) du terminal (10) conformément à un système de fichiers (14) installé sur le support de données mémoire (30).

3. Procédé selon la revendication 2, **caractérisé en ce que** le fichier (35) est affecté de telle façon à l'application (17) que le système d'exploitation (11) empêche au moins des accès en écriture d'autres applications (19) au fichier (35).

4. Procédé selon la revendication 3, **caractérisé en ce que** l'adresse mémoire déterminée est mémorisée temporairement pour des accès directs subséquents de l'application (17), de préférence dans la zone mémoire (x3) occupée par le fichier (35).

5. Procédé selon la revendication 3 ou 4, **caractérisé en ce que** c'est au moyen d'une fonction de système d'exploitation (15) ou au moyen d'une évaluation d'un système de fichiers (14) du support de données mémoire (30) que l'application (17) détermine une adresse mémoire dans la zone mémoire (x3) occupée par le fichier (35).

6. Procédé selon une des revendications précédentes, **caractérisé en ce que** l'application (17), lors d'un accès direct à une ou à plusieurs adresses mémoire déterminées dans la zone mémoire (x3) occupée par le fichier (35), vérifie si, à au moins une des adresses mémoire déterminées, il se trouve une séquence d'indicateur (37), et constate une incohérence de données dans le cas où il ne s'y trouve pas de séquence d'indicateur (37).

7. Procédé selon la revendication 6, **caractérisé en ce que** l'application (17), lors de la vérification destinée à discerner si, dans le support de données mémoire (30) ou à une ou à plusieurs adresses mémoire déterminées dans la zone mémoire (x3) occupée par le fichier (35), il se trouve une séquence d'indicateur (37), déclenche une ouverture du fichier (35) afin d'empêcher un accès concurrentiel en écriture au fichier (35) d'un système d'exploitation (11) du terminal (10).

8. Procédé selon une des revendications 6 ou 7, **caractérisé en ce que**, lors de création du fichier (35), au moins une séquence d'indicateur (37) préétablie est enregistrée à au moins une adresse mémoire dans la zone mémoire (x3) occupée par le fichier (35).

9. Procédé selon une des revendications précédentes, **caractérisé en ce que**, lors d'un accès direct, par l'application (17), à la zone mémoire (x3) occupée par le fichier (35), au moins une séquence d'indicateur (37) préétablie est, à au moins une adresse mémoire dans la zone mémoire (x3) occupée par le fichier (35), renouvelée ou modifiée.

10. Procédé selon la revendication 8 ou 9, **caractérisé en ce que**, lors de l'enregistrement de séquences d'indicateur (37) préétablies dans la zone mémoire (x3) occupée par le fichier (35), ce sont respectivement différentes séquences d'indicateur (37) qui sont préétablies.

11. Procédé selon une des revendications de 8 à 10, **caractérisé en ce que**, lors de l'enregistrement d'au moins une séquence d'indicateur (37) à au moins une adresse mémoire dans la zone mémoire (x3) occupée par le fichier (35), une séquence d'indicateur (37) est enregistrée essentiellement dans chaque bloc de données mémoire de la zone mémoire (x3), et l'application (17) accède bloc mémoire par bloc mémoire à la zone mémoire (x3) occupée par le fichier (35).

12. Terminal (10) comprenant au moins un système d'exploitation (11), une mémoire, un processeur destiné à l'exécution d'une application (17) se trouvant dans la mémoire, ainsi qu'une interface de communication de données (13) destinée à la liaison avec un support de données mémoire (30) portable, **caractérisé en ce que** le système d'exploitation (11) est conçu pour créer un fichier (35) affecté à l'application (17) dans le support de données mémoire (30) relié au terminal (10), et pour mettre à disposition une fonctionnalité d'indicateur (16) par l'intermédiaire de laquelle l'application (17) peut déterminer, dans la zone mémoire (x3) occupée par le fichier (35), une adresse mémoire pour un accès direct à la zone mémoire (x3) occupée, **en ce que** l'application (17) peut déterminer, pour un accès direct, une adresse mémoire dans la zone mémoire (x3) occupée par le fichier (35), et **en ce que** l'application (17) peut, lors d'un accès direct à la zone mémoire (x3) occupée par le fichier (35), vérifier la présence d'au moins d'une séquence d'indicateur (37) préétablie dans le support de données mémoire (30), cependant que la au moins une séquence d'indicateur (37) peut marquer et préétablir de telle façon des adresses mémoire dans la zone mémoire (x3) occupée par le fichier (35) que la probabilité que des données utiles présentes dans le support de données mémoire (30) comprennent une séquence de données identique à la au moins une séquence d'indicateur (37) est minimisée.

13. Produit programme d'ordinateur conçu pour être exécuté en tant qu'application (17) par le terminal (10) selon la revendication 12, **caractérisé en ce que** le produit programme d'ordinateur est en outre conçu pour déterminer en tant qu'application (17) exécutée une adresse mémoire dans la zone mémoire (x3) occupée par le fichier (35), pour accéder directement, par le biais de l'adresse mémoire déterminée, à la zone mémoire (x3) occupée, et est en outre conçu pour, en tant qu'application (17) exécutée, déterminer, pour un accès direct, une adresse mémoire dans la zone mémoire (x3) occupée par le fichier (35) et pour, lors d'un accès direct à la zone mémoire (x3) occupée par le fichier (35), vérifier la présence d'au moins une séquence d'indicateur (37) préétablie dans le support de données mémoire (30), cependant que la au moins une séquence d'indicateur (37) marque des adresses mémoire dans la zone mémoire (x3) occupée par le fichier (35) et est préétablit de telle façon que la probabilité que des données utiles présentes dans le support de données mémoire (30) comprennent une séquence de données identique à la au moins une séquence d'indicateur (37) est minimisée.

14. Terminal (10) selon la revendication 12, doté d'un produit programme d'ordinateur selon la revendication 13 exécutable en tant qu'application (17), **caractérisé en ce que** le terminal 10 et le produit programme d'ordinateur exécuté en tant qu'application (17) sont conçus de telle façon qu'ils peuvent entrer en interaction conformément à un procédé selon une des revendications de 1 à 11.
